(19) Europäisches Patentamt

European Patent Office

Office européen des brevets

(11) EP 0 673 674 B1

(12) EUROPÄISCHE PATENTSCHRIFT

(45) Veröffentlichungstag und Bekanntmachung des Hinweises auf die Patenterteilung:
30.09.1998 Patentblatt 1998/40

(51) Int. Cl.$^6$: **B01D 69/12**, B01D 61/36, B01D 71/30

(21) Anmeldenummer: 95200445.5

(22) Anmeldetag: 23.02.1995

(54) **Komposit-Membran und ein Verfahren zu ihrer Herstellung**

Composite membrane and process for preparing the same

Membrane composite et son procédé de préparation

(84) Benannte Vertragsstaaten:
CH DE FR GB LI NL

(30) Priorität: 23.03.1994 DE 4409906

(43) Veröffentlichungstag der Anmeldung:
27.09.1995 Patentblatt 1995/39

(73) Patentinhaber:
METALLGESELLSCHAFT AKTIENGESELLSCHAFT
60323 Frankfurt am Main (DE)

(72) Erfinder:
• Haenel, Peter, Dr.
D-61130 Nidderau (DE)
• Schwerdtner, Erika
D-65750 Eschborn (DE)
• Helmrich, Harald, Prof. Dr.
D-60437 Frankfurt am Main (DE)

(56) Entgegenhaltungen:
EP-A- 0 498 509        EP-A- 0 564 045
US-A- 3 966 834

• JOURNAL OF MEMBRANE SCIENCE, Bd.76, Nr.2/3, 2. Februar 1993, AMSTERDAM,NL Seite 269-279 M.BODZEK ET AL 'ultrafiltration membranes made of vinyl chloride-vinyl acetate copolymer'
• JOURNAL OF MEMBRANE SCIENCE, Bd.81, Nr.1/2, 16. Juni 1993, AMSTERDAM,NL Seite 57-70 G.H.KOOPS ET AL 'poly(vinyl chloride)polyacrylonitrile composite membranes for dehydration of acetic acid'

**Beschreibung**

Die Erfindung betrifft eine Komposit-Membran, bestehend aus einer porösen Trägerschicht, einer porösen Stützschicht und einer porenfreien Trennschicht.

Aus dem Dokument EP-A-0 564 045 ist eine Komposit-Membran, welche als Trennschicht eine dichte, defektfreie Polyvinylchloridschicht (PVC-Schicht) aufweist, bekannt. Solche Membranen sind für die Entwässerung von verdünnten organischen Säuren in einem Pervaporationsverfahren geeignet. Aus dem genannten Dokument ist bekannt, daß für die Trennschicht Polyvinylchloridblends mit geringen Anteilen an Polyvinylacetat (PVac), Polyvinylalkohol (PVal) und anderen Polymeren eingesetzt werden. Trennschichten aus reinem PVC-Polymer sind bevorzugt, und es sind dem Dokument nur Beispiele zu entnehmen, in denen reines PVC-Polymer als Trennschicht eingesetzt wurde. Es wurden teilweise zufriedenstellende Selektivitäten und Permeatflußraten erzielt, wobei allerdings bei den hohen Permeatflußraten die Selektivität stark zurückging.

Die Erfindung hat sich die Aufgabe gestellt, Komposit-Membranen zu schaffen, die sowohl hinsichtlich ihrer Trennkennwerte als auch ihrer Einsatzbreite und der mechanischen Beständigkeit die bekannten Membranen verbessern. Ferner liegt der Erfindung die Aufgabe zugrunde, ein Verfahren zur Herstellung dieser Komposit-Membranen zu schaffen.

Erfindungsgemäß wird die Aufgabe dadurch gelöst, daß die Komposit-Membran aus einer porösen Trägerschicht, einer porösen Stützschicht und einer porenfreien Trennschicht besteht, wobei die Trägerschicht ein Faservlies oder -gewebe aus Polyester-, Polyphenylensulfid-, Polypropylen-, Polyvinylidendifluorid-, Polyamid- oder Glasfasern, die Stützschicht aus Polysulfon, Polyimid, Polyvinylalkohol, Polyurethan, Polyvinylidendifluorid, Polyethersulfon, Polyacrylnitril, Polyetherketon, Polyetheretherketon, Polyetherimid oder deren Copolymere ist und die Trennschicht im wesentlichen aus einem Polyvinylchlorid-Polyvinylacetat-Copolymeren besteht, bei dem der Polyvinylacetat-Anteil 10 bis 25 Gew.-% des Copolymeren beträgt. Die erfindungsgemäßen Komposit-Membranen erreichen verbesserte Trennkennwerte beim Einsatz unter Pervaporations- oder Dampfpermeationsbedingungen. Darüber hinaus erweisen sich die erfindungsgemäßen Komposit-Membranen überraschenderweise nicht nur für die Entwässerung von organischen Säuren, wie Ameisensäure, Essigsäure, Oxalsäure und anderen, als geeignet, sondern sie können auch für die Entwässerung von anorganischen Säuren, wie HCl, $H_2SO_4$, $H_3PO_4$, $HNO_3$, eingesetzt werden.

In vorteilhafter Weise werden als Trennschicht PVC-PVac-Copolymere eingesetzt, die einen Anteil von ca. 1 Gew.-% Dicarbonsäuren enthalten.

In vorteilhafter Weise wird eine Trennschicht eingesetzt, die eine Dicke von 3 bis 15 μm hat.

In vorteilhafter Weise wird eine Stützschicht verwendet, die aus Polyacrylnitril (PAN) besteht.

Die erfindungsgemäße Komposit-Membran wird dadurch hergestellt, daß

a) auf eine aus einem Faservlies oder -gewebe bestehende Trägerschicht eine poröse Stützschicht aufgetragen und getrocknet wird,

b) auf dieses aus Träger- und Stützschicht gebildete Trägermaterial eine 5 bis 40 Gew.-%ige Lösung eines PVC-PVac-Copolymeren in einem für das Trägermaterial inerten Lösemittel oder Lösemittelgemisch aufgetragen wird und

c) das Lösemittel oder Lösemittelgemisch verdampft sowie anschließend die Komposit-Membran über einen Zeitraum von 1 bis 60 Minuten bei einer Temperatur von 80 bis 160°C getempert wird.

Die erfindungsgemäße Komposit-Membran kann als Pervaporations- oder Dampfpermeationsmembran zur Abtrennung von Wasser aus verdünnten organischen oder anorganischen Säuren verwendet werden.

In vorteilhafter Weise wird die Entwässerung von verdünnten organischen oder anorganischen Säuren in einem Pervaporations- oder Dampfpermeationsverfahren unter Verwendung der erfindungsgemäßen Komposit-Membran in der Weise vorgenommen, daß eine verdünnte Säure mit einem Wassergehalt von 1 bis 90 Gew.-% bei einer Feed-Temperatur von 50 bis 95°C, einem Feed-Druck von 1 bis 5 bar und einem Druck auf der Permeatseite von 0,5 bis 50 mbar entwässert wird.

Die Erfindung wird anhand der nachfolgenden Beispiele näher erläutert.

Beispiel 1

Auf ein Trägermaterial, bestehend aus einer porösen Polyacrylnitril-Stützschicht auf einem Polyesterfasergewebe (CMF-DY-040[R] der Fa. CM-Celfa), wurde eine 30 Gew.-%ige Lösung eines PVC-PVac-Copolymeren (Vinol H15/45M[R] der Fa. Wacker) in Aceton mit Hilfe einer Laborstreichvorrichtung (LTSV der Fa. Mathis) aufgebracht. Dabei ist zu beachten, daß das Trägermaterial vor der Beschichtung völlig trocken ist. Nach Abdampfen des Lösemittels hatte sich

eine ca. 7 μm dicke Trennschicht auf dem Trägermaterial gebildet. Anschließend wurde die Komposit-Membran ca. 10 Minuten bei 140°C getempert.

Beispiel 2

Auf ein Trägermaterial gemäß Beispiel 1 wurde ein Naßfilm gemäß Beispiel 1 von 10 μm aufgebracht. Das Trägermaterial war vor der Beschichtung völlig trocken. Nach Abdampfen des Acetons während 10 Minuten bei 100°C hatte sich eine 3 μm dicke Trennschicht gebildet.

Beispiel 3

Die Herstellung einer Komposit-Membran gemäß Beispiel 2 wurde wiederholt. Nach Abdampfen des Acetons während 10 Minuten bei 150°C hatte sich eine 3 μm dicke Trennschicht gebildet.

Beispiel 4

Mit einer Komposit-Membran, hergestellt gemäß Beispiel 1, wurde eine 80 Gew.-%ige Essigsäure in einem Pervaporationsverfahren fortschreitend entwässert. Bei einer Temperatur von 80°C der zugeführten Essigsäure (Feed), einem Druck von 3 bar auf der Feed-Seite und 5 mbar auf der Permeatseite wurde anfangs eine Konzentration von 0,4 Gew.-% Essigsäure im Permeat bei einem Fluß von 0,28 kg/m$^2$h gefunden. Am Ende der fortschreitenden Entwässerung, bei der eine 98 Gew.-%ige Essigsäure als Feed zugeführt wurde, stieg der Gehalt an Essigsäure im Permeat auf 13,97 Gew.-%, währenddessen der Fluß auf 0,15 kg/m$^2$h abnahm.

Ein Vergleich der Ergebnisse, die mit dem erfindungsgemäßen Membranen erzielt wurden, und den Ergebnissen, wie sie aus dem Stand der Technik bekannt sind (A, B), wurde unter normierten Bedingungen durchgeführt und in der nachfolgenden Tabelle zusammengestellt. Gleichzeitig enthält die Tabelle die Daten, die bei Verwendung der nach Beispiel 1 hergestellten Membran für die Abtrennung von Wasser aus anorganischen Säuren erhalten wurden. Der Trennfaktor $\alpha$ ist dabei definiert als

$$\alpha = \frac{X_A \cdot Y_B}{X_B \cdot Y_A} ,$$

wobei $X_A$, $X_B$ die Konzentrationen der Komponenten A und B im Einsatzgemisch und $Y_A$, $Y_B$ die Konzentrationen der Komponenten A und B im Dampf, der durch die Membran permeiert, bedeuten. Der Vergleich zeigt die überlegenen Trenneigenschaften der erfindungsgemäßen Membranen.

TABELLE

| Nr. | Herstellparameter | | | Meßergebnisse | | | |
|-----|-------------|------|------|------|------|------|------|
| | Filmdicke µm | Trocknungs-Temperatur °C | Trocknungs-Dauer min | Meßtemperatur °C | Permeat-Druck mbar | Trenn-Faktor $\alpha$ | Spez. Fluß/µm Schicht kg/m$^2$h |
| | Essigsäure/Wasser ca. 80/20 Gew.-% | | | | | | |
| 1 | 7 | 140 | 10 | 80,9 | 5 | 1079 | 1,96 |
| 2 | 3 | 100 | 10 | 79,6 | 5 | 159 | 0,96 |
| 3 | 3 | 150 | 10 | 79,8 | 5 | 44050 | 1,11 |
| A | 9 | 20 | | | | 567 | 0,35 |
| B | 3 | 20 | | | | 231 | 0,45 |
| | Schwefelsäure/Wasser ca. 70/30 Gew.-% | | | | | | |
| 1 | 7 | 140 | 10 | 60,9 | 5 | 4285 | 0,28 |
| | Phosphorsäure/Wasser ca. 70/30 Gew.-% | | | | | | |
| 1 | 7 | 140 | 10 | 63,0 | 15 | 4148 | 1,82 |

**Patentansprüche**

1. Komposit-Membran, bestehend aus einer porösen Trägerschicht, einer porösen Stützschicht und einer porenfreien Trennschicht, wobei die Trägerschicht ein Faservlies oder -gewebe aus Polyester-, Polyphenylensulfid-, Polypropylen-, Polyvinylidendifluorid-, Polyamid- oder Glasfasern, die Stützschicht aus Polysulfon, Polyimid, Polyvinylalkohol, Polyurethan, Polyvinylidendifluorid, Polyethersulfon, Polyacrylnitril, Polyetherketon, Polyetheretherketon, Polyetherimid oder deren Copolymere ist und die Trennschicht im wesentlichen aus einem Polyvinylchlorid-Poyvinylacetat-Copolymeren besteht, bei dem der Polyvinylacetat-Anteil 10 bis 25 Gew.-% des Copolymeren beträgt.

2. Komposit-Membran nach Anspruch 1, dadurch gekennzeichnet, daß das PVC-PVac-Copolymer einen Anteil von ca. 1 Gew.-% Dicarbonsäuren enthält.

3. Komposit-Membran nach den Ansprüchen 1 und 2, dadurch gekennzeichnet, daß die Trennschicht eine Dicke von 3 bis 15 µm hat.

4. Komposit-Membran nach einem oder mehreren der Ansprüche 1 bis 3, dadurch gekennzeichnet, daß die Stützschicht aus Polyacrylnitril besteht.

5. Verfahren zur Herstellung einer Komposit-Membran nach einem oder mehreren der Ansprüche 1 bis 4, dadurch gekennzeichnet, daß

   a) auf eine aus einem Faservlies oder -gewebe bestehende Trägerschicht eine poröse Stützschicht aufgetragen und getrocknet wird,

   b) auf dieses aus Träger- und Stützschicht gebildete Trägermaterial eine 5 bis 40 Gew.-%ige Lösung des PVC-PVac-Copolymeren in einem für das Trägermaterial inerten Lösemittel oder Lösemittelgemisch aufgetragen wird und

   c) das Lösemittel oder Lösemittelgemisch verdampft sowie anschließend die Komposit-Membran über einen Zeitraum von 1 bis 60 Minuten bei einer Temperatur von 80 bis 160°C getempert wird.

6. Verwendung der Komposit-Membran nach einem oder mehreren der Ansprüche 1 bis 4 als Pervaporations- oder Dampfpermeationsmembran zur Abtrennung von Wasser aus verdünnten organischen oder anorganischen Säuren.

7. Verfahren zur Entwässerung von verdünnten organischen oder anorganischen Säuren unter Verwendung der Komposit-Membran nach einem oder mehreren der Ansprüche 1 bis 4, dadurch gekennzeichnet, daß eine verdünnte Säure mit einem Wassergehalt von 1 bis 90 Gew.-% bei einer Feed-Temperatur von 50 bis 95°C, einem Feed-Druck von 1 bis 5 bar und einem Druck auf der Permeatseite von 0,5 bis 50 mbar entwässert wird.

## Claims

1. A composite membrane, consisting of a porous carrier layer, a porous supporting layer and a pore-free separating layer, the carrier layer being a fibrous non-woven or woven fabric made of fibres of polyester, polyphenylene sulphide, polypropylene, polyvinylidene difluoride, polyamide or glass fibres, the supporting layer being made of polysulphone, polyimide, polyvinyl alcohol, polyurethane, polyvinylidene difluoride, polyether sulphone, polyacrylonitrile, polyether ketone, polyether ether ketone, polyether imide or copolymers thereof, and the separating layer consisting essentially of a polyvinyl chloride-polyvinyl acetate copolymer in which the polyvinyl acetate content is 10 to 25% by weight of the copolymer.

2. A composite membrane according to Claim 1, characterised in that the PVC-PVac copolymer has a content of approximately 1% by weight dicarboxylic acids.

3. A composite membrane according to Claims 1 and 2, characterised in that the separating layer has a thickness of 3 to 15 μm.

4. A composite membrane according to one or more of Claims 1 to 3, characterised in that the supporting layer consists of polyacrylonitrile.

5. A method for the production of a composite membrane according to one or more of Claims 1 to 4, characterised in that

   a) a porous supporting layer is applied to a carrier layer consisting of a fibrous non-woven or woven fabric and is dried,

   b) a 5 to 40% by weight solution of the PVC-PVac copolymer in a solvent or solvent mixture inert to the carrier material is applied to this carrier material consisting of carrier layer and supporting layer, and

   c) the solvent or solvent mixture is evaporated and then the composite membrane is baked at a temperature of 80 to 160°C for a period of 1 to 60 minutes.

6. The use of the composite membrane according to one or more of Claims 1 to 4 as a pervaporation or vapour permeation membrane for separating off water from dilute organic or inorganic acids.

7. A method for removing water from dilute organic or inorganic acids using the composite membrane according to one or more of Claims 1 to 4, characterised in that water is removed from a dilute acid having a water content of 1 to 90% by weight at a feed temperature of 50 to 95°C, a feed pressure of 1 to 5 bar and a pressure on the permeate side of 0.5 to 50 mbar.

## Revendications

1. Membrane composite constituée d'une couche de substrat poreuse, d'une couche de support poreuse et d'une couche de séparation exempte de pores, la couche de substrat étant constituée d'un non-tissé ou d'un tissu de fibres de polyester, de poly(sulfure de phénylène), de polypropylène, de poly(difluorure de vinylidène), de polyamide ou de fibre de verre, la couche de support étant constituée de polysulfone, de polyimide, de poly(alcool vinylique), de polyuréthanne, de poly(difluorure de vinylidène), de polyéthersulfone, de polyacrylonitrile, de polyéthercétone, de polyétheréthercétone, de polyétherimide, ou de leurs copolymères, et la couche de séparation étant essentiellement constituée d'un copolymère poly(chlorure de vinyle)-poly(acétate de vinyle, dans lequel la proportion de poly(acétate de vinyle) représente de 10 à 25 % en poids du copolymère.

2. Membrane composite selon la revendication 1, caractérisée en ce que le copolymère PVC-PVac contient une proportion d'environ 1 % en poids d'acides dicarboxyliques.

3. Membrane composite selon les revendications 1 et 2, caractérisée en ce que la couche de séparation a une épaisseur de 3 à 15 micromètres.

4. Membrane composite selon une ou plusieurs des revendications 1 à 3, caractérisée en ce que la couche de support est constituée de polyacrylonitrile.

5. Procédé de préparation d'une membrane composite selon une ou plusieurs des revendications 1 à 4, caractérisé

a) en ce que l'on applique sur une couche de substrat constituée d'un non-tissé ou d'un tissu de fibres une couche de support poreuse et en ce qu'on la sèche ;
b) en ce qu'on applique sur cette matière de substrat constituée d'une couche de substrat et d'une couche de support une solution à 5 à 40 % en poids du copolymère PVC-PVac dans un solvant ou un mélange de solvants inerte vis-à-vis de la matière de substrat, et
c) en ce que l'on fait évaporer le solvant ou le mélange de solvants, puis on met la membrane composite sur une durée de 1 à 60 minutes à une température de 80 à 160 °C.

6. Utilisation de la membrane composite selon une ou plusieurs des revendications 1 à 4 comme membrane d'évaporation à travers une membrane ou de perméation de vapeur pour la séparation de l'eau d'acides organiques ou minéraux dilués.

7. Procédé de déshydratation d'acides organiques ou minéraux dilués en utilisant la membrane composite selon une ou plusieurs des revendications 1 à 4, caractérisé en ce qu'on déshydrate un acide dilué ayant une teneur en eau de 1 à 90 % en poids à une température d'alimentation de 50 à 95 °C, sous une pression d'alimentation de 1 à 5 bars et sous une pression du côté perméat de 0.5 à 50 mbars.